# EUROPEAN PATENT SPECIFICATION

(11) **EP 0 879 727 B1**
(45) Date of publication and mention of the grant of the patent: **26.03.2003**
(21) Application number: 97108354.8
(22) Date of filing: 23.05.1997
(51) Int. Cl.: B60K 15/035

(54) **Valve unit for a motor vehicle fuel supply system**
Ventileinsatz für das Kraftstoffversorgungssystem eines Kraftfahrzeugs
Unité de soupape pour un système d'alimentation en carburant d'un véhicule automobile

(43) Date of publication of application: 25.11.1998
(73) Proprietor: ERGOM HOLDING S.p.A, 10071 Borgaro Torinese (Torino) (IT)
(72) Inventor: Cimminelli, Francesco, 10143 Torino (IT); Castagneri, Giulio, 10076 Nole (Torino) (IT); Lobascio, Osvaldo, 10078 Venaria Reale (Torino) (IT)
(74) Representative: Rambelli, Paolo

(56) References cited:
- EP-A- 0 773 128
- DE-A- 19 534 021
- US-A- 5 083 583

## Description

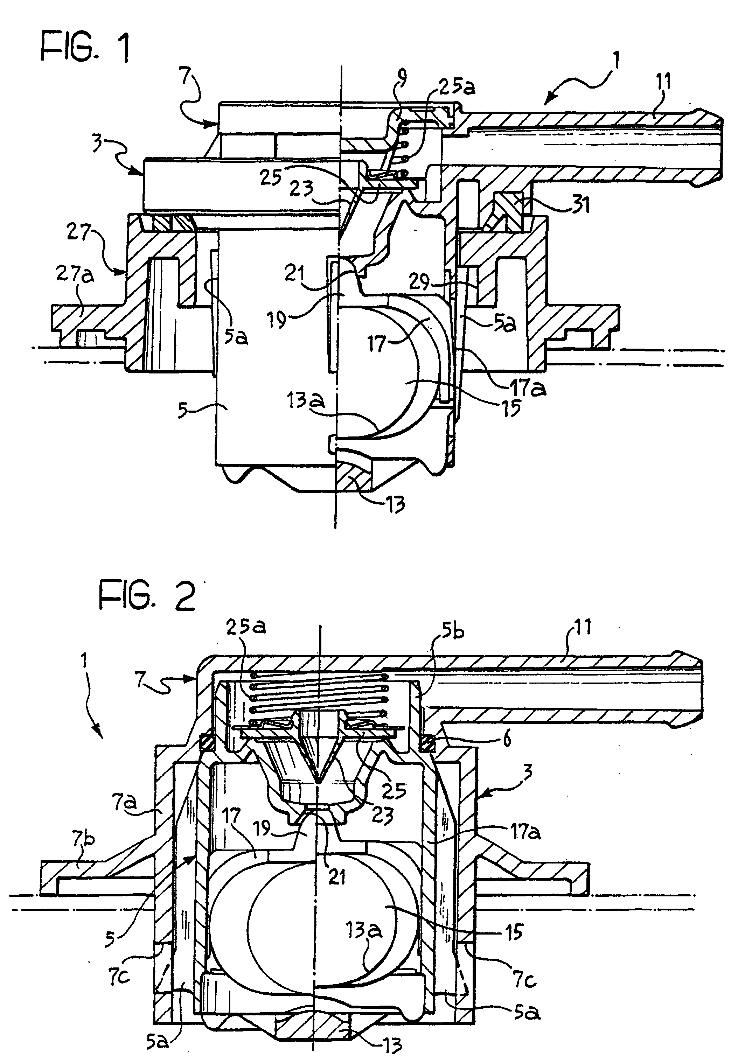

The present invention relates to a valve unit for the fuel-supply system of a vehicle, including a body which can be connected rigidly to an element of the supply system particularly a tank or a fuel filler pipe, in a position which is normally higher than the level of the fuel, this body including a valve housing and a cover for the housing having means for connection to a service duct of the vehicle. A unit of the type mentioned above is known, for example, from Italian Application No. TO92U000198 which relates to a safety valve for a motor-vehicle fuel tank, a sectioned side-elevational view whereof is illustrated in the appended Figure 1. With reference to this Figure, the valve unit 1, which is of the so-called multi-functional type, includes a body 3 constituted by a housing 5 the top of which is closed by a cover 7. The cover 7 is made for the most part integrally with the housing 5 except for a small circular cap 9 located on the top and has a outlet connector 11 for connection to a service duct of the vehicle, for example a vent duct (not illustrated in the drawings), intended to be connected to the intake manifold of the engine so that the fuel vapour may be re-supplied to the engine together with the inducted air through an active-carbon trap, also known as a "carbon canister" . Alternatively this service duct could even be the filler pipe itself for the tank in which case the valve is generally of the anti-blow-back type. A base 13 is snap engageable in the bottom of the housing 5 and its inner face provides a conical cavity 13a in which a ball 15 can rest. The ball 15 is also partially surrounded by a cage 17 slidable axially along guides 17a formed axially along the inner surface of the housing 5 and has a pin obturator 19 adapted to co-operate with a valve seat 21 defined in the casing 5 itself. Above the seat 21 is a so-called "goose beak" relief diaphragm valve 23 which can open when there is a lower pressure in the system downstream of the unit 1, for example in the tank, than in the upstream part of the system, and a pressure-relief valve with a disc obturator 25 acted upon by a spring 25a and intended to open if the pressure in the system upstream of the unit 1 is higher than downstream.

A valve unit of this type is generally known as a multi-functional valve since it combines several functions within it. However the present invention can also be applied to single-function valve units, that is having only one of the functions mentioned above, for example comprising an anti-blow-back back valve or a float valve or a pressure relief valve which operates only for low pressures or over-pressures or a roll-over safety valve.

In order to ensure correct operation of valves associated with motor-vehicle fuel tanks or with an expansion vessel or a vapour separator possibly connected to the filler pipe of the tank, or with the filler pipe itself, these are necessarily made from a material which is chemically inert to hydrocarbons. In general plastics materials based on acetal resins are preferred, such as polyoxymethylene, because of their resistance to hydrocarbons, dimensional stability and ease of moulding.

More particularly, in order to ensure that the unit 1 operates well under all conditions of use, the housing 5 with its guides 17a, the cover 7, the base 13, the cage 17 and the valve seat 21 are made from acetal-resin based plastics material.

Acetal-resin based materials are not, however, very compatible with the materials commonly used to make the tanks or fuel filler pipes and, more particularly, cannot be welded thereto. It is thus common practice to interpose an intermediate connector member 27 of a material compatible with that of the tank, and which can thus be welded to it, between the housing 5 and the aperture of that element of the supply system which is to receive it. More particularly, the connector member 27 has an external flange 27a for facilitating the welding and internal connection guides 29 of bayonet type for bayonet coupling to the housing 5. An annular washer 31 of elastomeric material is generally interposed between the housing 5 and the member 27.

However, the sealing provided by the washer 31 has proved to be critical in view of recent regulations which set a goal limiting the emissions of volatile substances in fuels into the atmosphere in that the washer does not fully guarantee satisfactory sealing and, elastomeric materials being notorious for aging in the presence of hydrocarbons, emissions will inevitably increase in time with the progressive loss of efficiency of the washer.

Valve units are also known in which the housing and its cover are made integrally from a material adapted to be welded to a wall portion of the vehicle tank, in particular from the same material as used for making the tank itself.

Such units are not, however, very reliable as the material which constitutes the housing does not have the necessary dimensional stability in the presence of hydrocarbons and are even less well adapted for the manufacture of single-function valve units and certainly not for the more complex multi-functional type. Moreover these known units do not have the desired characteristics of replaceability.

Particularly, the present invention relates to a valve unit of the type defined above, wherein the cover is separate from the housing and is made from a material which can be welded directly to an aperture in the element of the supply system, this cover including a skirt adapted to receive the housing and being provided with releasable retaining means for connection to the housing. A unit of this type is known from EP-A-0 773 128.

Such a valve unit allows the elimination of the washer 31 which had to be interposed between the housing of the valve unit and the member for connection to the tank in an attempt to limit the leakage of hydrocarbon vapours to the atmosphere, providing effective sealing by means of the weld between the cover of the unit and the respective tank or pipe. Moreover, the assembly of the valve unit is facilitated since the cover may be welded directly to the tank by automatic welding apparatus while, in the valve of Fig. 1, the unit had to be inserted manually in the connector member.

An object of the invention is to provide a valve unit applied to tanks or filler pipes which limits the emission of volatile substances in fuels into the environment and which is simpler and more economical than similar known units.

This object is attained according to the invention by a unit of the type defined above, characterised in that the skirt extends to surround a major axial of the housing, and the housing has a smaller diameter end neck which, when the housing is inserted into the skirt, protrudes axially relative to the housing in the aperture of the element of the supply system and is adapted to be housed in a corresponding seat within the cover, a sealing member being provided between the neck and the cover thereby to remove play between them.

Further characteristics and advantages of the invention will become clearer from the detailed description which follows, made with reference to the appended drawings, provided purely by way of non-limitative example, in which:
Figure 1 is a partially-sectioned elevational view of a valve unit according to the prior art,
Figure 2 is a view similar to Figure 1 of a valve unit according to the present invention, and
Figure 3 is an exploded perspective view illustrating the component elements of the unit of Figure 2.

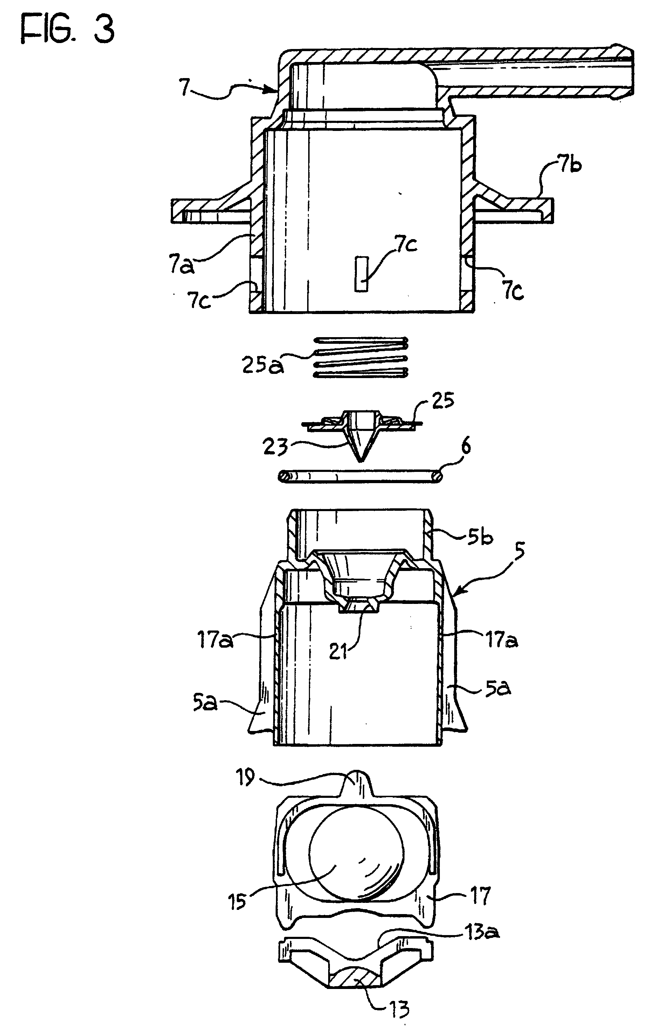

With reference to Figures 2 and 3, in which elements which are the same as, or similar to, those of Figure 1 have been indicated by the same reference numerals for greater clarity, the unit 1 according to the invention includes a cover 7 formed integrally with the outlet connector 11 and having a cylindrical skirt 7a intended to surround a major axial portion of the housing 5.

An annular flange 7b extends radially from the skirt 7a and its peripheral edge has a circular lip or "track" adapted to constitute, even if only partially, additional material for forming the weld close to a circular aperture formed in the tank or in its filler pipe.

The cover 7 is made from a material compatible with that of the tank or filler pipe, for example of the same material, such as high-density polythene (HDPE) with a high molecular weight, possibly reinforced with glass fibres or metal respectively in the case of tanks of polythene or metal, or of polyamide, possibly with a filler of glass fibres, in the case of polyamide pipes. The welding of the flange 7b to the wall (indicated in chain line in the drawings) of the element of the supply system to which the unit 1 is to be attached may be achieved by means of a heated blade in the more general case of plastics materials while, for metals, it will be carried out by other known techniques, for example brazing.

The housing 5 is preferably made from an acetal-resin based plastic material, for example polyoxymethylene, and is substantially cylindrical in shape with dimensions such as to allow it to be inserted coaxially within the skirt 7a of the cover 7. More particularly, the housing 5 has a neck 5b of narrower diameter at one end adapted to be received in a seat within the cover 7, which constitutes a reference portion for correct coupling. An O-ring 6 is inserted between the base of the neck 5b and the cover 7 and acts partly as a sealing element between the housing 5 and the cover 7 and partly to eliminate any possible play between these elements. The sealing of the unit 1 differs from that provided by the washer 31 of the prior art as any leakage of fuel vapour past the O-ring 6 does not prejudice the sealing since vapour is conveyed to the outlet connector 11 and cannot reach the external environment.

Retaining elements 5a formed integrally on the outer wall of the housing 5 are adapted to co-operate with corresponding seats 7c formed in the skirt 7a to allow the housing 5 to be coupled to the cover 7. These retaining elements may be of any known type, for example of snap-engaging or bayonet type, and may alternatively comprise projections on the skirt 7a and corresponding seats formed in the housing 5.

The members within the housing 5 are then made in known manner.

In the more general case, the unit 1 according to the invention is particularly suitable for attachment to the associated element of the fuel-supply system by means of completely automated welding and assembly equipment which carries out a first operation of inserting the housing 5, in which the internal members have already been assembled, in the cover 7, a second operation of inserting the unit 1 through the aperture provided to receive it and a third operation of welding the flange 7b of the cover 7 to the wall of the associated element of the vehicle fuel-supply system.

When the cover 7 is of metal, thus having a high thermal conductivity, it may conveniently be welded to the cover 7 before the insertion of the housing 5 so that the heat evolved during the welding operation cannot harm the housing 5 and its internal members. In this case, the insertion of the housing 5 would occur through an auxiliary aperture provided in the element of the fuel-supply system, for example through a service access when this element is a fuel tank.

The possibility of replacing the housing 5 should it malfunction, even though this will be necessary only in very rare cases, is allowed through this same auxiliary aperture.

The housing 5 of the unit according to the invention may be made with perfectly standardised dimensions, whether it is intended to house a multi-functional valve or a single-function valve, and the covers 7 may all be made with the same shape and only from different materials to enable then to be welded to the respective element of corresponding material. Thus a single mould may be used to advantage to make the housings 5 for different types of valves.

## Claims

1. A valve unit for the fuel-supply system of a vehicle, comprising a body (3) which can be connected rigidly to an element of the fuel-supply system, particularly a tank or a fuel filler pipe, in a position which is normally above the level of the fuel, the body (3) including a valve housing (5) and a cover (7) for the housing (5) having means (11) for connection to a service duct of the vehicle, wherein the cover (7) is separate from the housing (5) and is made from a material which can be welded directly to an aperture in the said element of the supply system, said cover (7) including a skirt (7a) adapted to receive the housing (5) and being provided with releasable retaining means (5a, 7c) for connection to the housing (5),
**characterised in that**
said skirt (7a) extends to surround a major axial portion of the housing (5), and the housing (5) has a smaller-diameter end neck (5b) which, when the housing (5) is inserted into the skirt (7a), protrudes axially relative to the housing in the aperture of the element of the supply system and is adapted to be housed in a corresponding seat within the cover (7), a sealing member (6) being provided between said neck (5b) and the cover (7) thereby to remove play between them.

2. A unit according to Claim 1, **characterised in that** the cover (7) has external flange means (7b) which have a portion intended to be welded directly around the edge of the aperture in the said element of the fuel-supply system.

3. A unit according to any one of Claims 1 to 2, **characterised in that** the releasable retaining means (5a, 7c) are of the snap-engageable type.

4. A unit according to any one of Claims 1 to 2, **characterised in that** the releasable retaining means (5a, 7c) are of the bayonet type.

5. A unit according to any one of Claims 1 to 4, **characterised in that** the housing (5) encloses a so-called multi-functional valve.

## Patentansprüche

1. Ventileinheit für das Kraftstoffzuführsystem eines Fahrzeugs, wobei die Ventileinheit einen Körper (3) aufweist, der starr mit einem Element des Kraftstoffzuführsystems, im Besonderen mit einem Tank oder mit einer Kraftstoffzuführleitung, an einer Stelle verbunden sein kann, die normalerweise über dem Pegel des Kraftstoffs liegt, wobei dieser Körper (3) ein Ventilgehäuse (5) sowie eine Abdeckung (7) für das Gehäuse (5) aufweist, die eine Vorrichtung (11) besitzt, um sie mit einem Servicekanal des Fahrzeugs zu verbinden, wobei die Abdeckung (7) vom Gehäuse (5) getrennt ist und aus einem Material besteht, das direkt mit einer Öffnung im Bauelement des Zuführsystems verschweißt werden kann, wobei die Abdeckung (7) einen Mantel (7a) aufweist, der so aufgebaut ist, dass er das Gehäuse (5) aufnehmen kann, und der mit einer freigebbaren Einspannvorrichtung (5a, 7c) versehen ist, um eine Verbindung mit dem Gehäuse (5) herzustellen,
**dadurch gekennzeichnet, dass**
der Mantel (7a) so verläuft, dass er einen axialen Hauptteil des Gehäuses (5) umgibt, und dass das Gehäuse (5) einen Endhals (5b) mit kleinerem Durchmesser besitzt, der dann, wenn das Gehäuse (5) in den Mantel (7a) eingesetzt wird, axial relativ zum Gehäuse in der Öffnung des Bauelements des Zuführsystems vorspringt, wobei er so aufgebaut ist, dass er in einem entsprechenden Sitz in der Abdeckung (7) untergebracht werden kann, wobei zwischen dem Hals (5b) und der Abdeckung (7) ein Dichtungselement (6) vorgesehen ist, um dadurch ein Spiel zwischen diesen beiden Bauteilen zu beseitigen.

2. Einheit gemäß Anspruch 1, **dadurch gekennzeichnet, dass** die Abdeckung (7) einen äußeren Flansch (7b) besitzt, der einen Teil besitzt, der dazu dient, um direkt rund um den Rand der Öffnung im Bauelement des Kraftstoffzuführsystems verschweißt zu werden.

3. Einheit gemäß irgendeinem der Ansprüche 1 bis 2, **dadurch gekennzeichnet, dass** die freigebbare Einspannvorrichtung (5a, 7c) eine Einschnappvorrichtung ist.

4. Einheit gemäß irgendeinem der Ansprüche 1 bis 2, **dadurch gekennzeichnet, dass** die freigebbare Einspannvorrichtung (5a, 7c) eine Bajonettvorrichtung ist.

5. Einheit gemäß irgendeinem der Ansprüche 1 bis 4, **dadurch gekennzeichnet, dass** das Gehäuse (5) ein sogenanntes multifunktionales Ventil umschließt.

## Revendications

1. Soupape pour le système d'alimentation en carburant d'un véhicule, comprenant un corps ( 3) pouvant être relié rigidement à un élément du système d'alimentation en carburant, en particulier à un réservoir ou à un tuyau de remplissage de carburant, dans une position qui est située normalement au dessus du niveau du carburant, le corps (3) comprenant une chambre de soupape (5) et un capot (7) pour la chambre (5) et possédant des moyens (11) permettant de le relier à une conduite d'entretien du véhicule, dans laquelle le capot (7) est séparé de la chambre (5) et est constitué d'un matériau pouvant être directement soudé à une ouverture dudit élément du système d'alimentation en carburant, ledit capot (7) comprenant une jupe (7a) prévue pour recevoir la chambre (5) et qui est munie d'un dispositif d'arrêt déverrouillable (5a, 7c) destiné à la relier à la chambre (5), **caractérisée en ce que**
ladite jupe (7a) entoure une grande partie axiale de la chambre (5), et la chambre (5) possède un collet d'extrémité (5b) de petit diamètre qui, lorsqu'on insère la chambre (5) dans la jupe (7a), fait saillie axialement par rapport à la chambre dans l'ouverture de l'élément du système d'alimentation en carburant et qui est prévu pour être logé dans une embase correspondante du capot (7), un élément d'étanchéité (6) étant disposé entre ledit collet (5b) et le capot (7) pour enlever le jeu qu'il y a entre eux.

2. Soupape selon la revendication 1, **caractérisée en ce que** le capot (7) possède des moyens de bride extérieure (7b) dont une partie est prévue pour être directement soudée autour du bord de l'ouverture dudit élément du système d'alimentation en carburant.

3. Soupape selon l'une quelconque des revendications 1 à 2, **caractérisée en ce que** le dispositif d'arrêt déverrouillable (5a, 7c) est de type encliquetable.

4. Soupape selon l'une quelconque des revendications 1 à 2, **caractérisée en ce que** le dispositif d'arrêt déverrouillable (5a, 7c) est de type à baïonnette.

5. Soupape selon l'une quelconque des revendications 1 à 4, **caractérisée en ce que** la chambre (5) enferme ce que l'on appelle une soupape multifonctions.
